# EUROPEAN PATENT APPLICATION

(11) **EP 4 557 097 A1**
(43) Date of publication of application: **21.05.2025**
(21) Application number: 23209785.7
(22) Date of filing: 14.11.2023
(51) Int. Cl.: G06F 9/50

(54) **ALGORITHM EXECUTION OPTIMISATION**

(71) Applicant: KLEPSYDRA TECHNOLOGIES GMBH, 8604 Zurich (CH)
(72) Inventor: GHIGLINO, Pablo, 8604 Zurich (CH)
(74) Representative: Dentons UK and Middle East LLP

(57) **Abstract**

A method is described for accelerating execution of an algorithm in a computing system comprising a central processing unit "CPU" and a plurality of processing elements, wherein the CPU is configured to orchestrate the operation of the plurality of processing elements. The method comprising implementing an optimiser to determine a configuration file for the computing system. The optimiser:
receives optimisation criteria relating to the operation of the algorithm;
receives data relating to the running of the algorithm in the computing system according to a naive configuration file; and
adjusts the naive configuration file to output an optimised configuration file according to the optimisation criteria.

The method is particularly suited to optimisation of execution of algorithms onboard satellites, such as neural networks for analysing satellite images. The optimisation can be performed on the ground as a one-off operation for subsequent implementation onboard.

## Description

The present application relates to the execution of instructions or algorithms such as data processing instructions by multiple processing elements under the control of a central processing unit "CPU". The invention is suitable for but not limited to execution of instructions by graphical processing units "GPUs" or array processors such as ISD's high performance data processor "HPDP" or any other computing resources which comprise multiple processing elements such as other co-processors or hardware accelerators.

### Background

Many modern processes, particularly in the field of artificial intelligence, require execution of complex and resource intensive computations. The efficiency of executing the computations depends on the degree of parallelisation of executing the instructions that make up the computations and the device which executes the instructions.

Deep Neural Networks "DNNs" are executed by a type of software called an artificial intelligence "AI" inference engine, commonly referred to as an AI algorithm. DNNs and other kinds of neural networks such as convolutional neural networks "CNNs" comprise layers. A DNN differs from other convolutional neural networks by comprising different types of layers and not only convolutional layers. They are also general purpose as opposed to CNNs which are generally aimed at image processing. The way in which these layers are connected (for example in a graph with multiple interconnections) is critical for the performance optimisation In the case of GPUs the layers are executed in "kernels". (The kernels referred to here are not to be confused with core software kernels which are computer programs that form the basis of a computer's operating system.) In the case of HPDPs the processing elements are referred to as "nodes" and the layers correspond to nodes.

In all of these examples, the operation of the multiple processing elements is orchestrated, or scheduled, by a CPU. The CPU is a standalone computing resource that can host an operating system whereas HPDPs and GPUs, and potentially other computing resources comprising multiple processing elements that might be used in the methods and systems described here, are neither standalone nor able to host an operating system.

It should be noted here that the HDPD is a particular co-processor, an array-based processor developed by Airbus Defence and Space GmbH in Munich and ISD SA in Greece. The methods described here may use other co-processors and other computing resources with multiple processing elements.

The present invention has been devised for optimisation of a High-Performance AI inference engine to execute DNN algorithms, but is applicable to performance optimisation of other algorithms. In the case of a High-Performance AI inference engine, the way in which the DNN layers are connected (for example in a graph with multiple interconnections) is a key factor for the performance optimisation.

In addition to the use of processing elements orchestrated by a CPU, execution of an algorithm such as a DNN can be further accelerated by parallelising the processing elements. In the case of a GPU this is achieved by the use of GPU streams and in the case of the HPDP this is by intelligent distribution of the DNN into the available nodes. In both cases orchestration by the CPU is critical.

With parallel streams, more than one kernel can be executed at the same time.

Properties of processes, such as latency, power consumption, throughput, and memory usage are affected by how the operators of an algorithm, such as layers of a DNN, are executed by the processing elements. Factors that affect such properties include, but are not limited to, the number of processing elements, the order in which the layers are executed, the distribution of the layers and their connections, and the memory capacity of the multiple processing elements. The factors themselves and their relationship with one another results in a complex arrangement and sometimes it may be difficult to determine how the layers are executed by the processing elements.

Accordingly, there is a desire to optimise execution of a DNN and to simplify optimisation of instruction execution.

The systems and methods described in the following are not only applicable to DNNs and may be used to optimise execution of any algorithm comprising operators structured in an analogous way to the layers of a DNN. Examples include encryption and decryption algorithms and others that will be familiar to those skilled in this art.

Current available solutions for GPU might not optimise the resources ending up with underutilised GPU resources. HPDP solutions are not available, but the market trend is to manually code each individual DNN, which can take between months and years to complete. The following describes solutions that address both problems by providing a dynamic but off-line optimisation approach.

The invention is not limited to implementations which solve any or all of the disadvantages of the known approaches described above.

### Summary

The invention is defined by the claims.

There is described in the following a method for accelerating execution of an algorithm in a computing system comprising a CPU and a plurality of processing elements, wherein the CPU is configured to orchestrate the operation of the plurality of processing elements, and if necessary to run part of the DNN algorithm. The method comprises implementing an optimiser to determine a configuration file for the computing system. The optimiser receives optimisation criteria relating to the operation of the algorithm; receives data relating to the running of the algorithm in the computing system according to a naive configuration file; and adjusts the naive configuration file to output an optimised configuration file according to the optimisation criteria.

The method is particularly suited to optimisation of execution of algorithms onboard satellites, such as neural networks for analysing satellite images. The optimisation can be performed on the ground as a one-off operation for subsequent deployment onboard. The method may be used to assign resources to layers based on their complexity (how much time the layer needs to process data) and the way they are connected (e.g., sometimes there are two layers that can be executed in parallel, one very fast and the other one very slow, in this case the optimiser will assign resources according not to have idle time in the processors or CPU).

The optimisation may comprise distributing the operators of an algorithm, such as layers in a DNN, into the processing elements so that the algorithm is executed in an optimal manner. To find this optimal manner, mathematical algorithms such as `Genetic Algorithms' and 'Convex Optimisation' may be used. Moreover, in order to achieve this optimal distribution, the CPU is used to orchestrate the execution of the algorithm in the hardware accelerator.

The configuration file may comprise an allocation of algorithm operators, optionally in one or more streams, to processing elements and a description of how these operators are connected (i.e., how the output of one operator is connected to the input to the next operator: memory sharing or via a communication protocol such as SpaceWire¹). This allows for dynamic reconfiguration (e.g. by providing a different configuration file, the DNN or other algorithm will perform differently) in a manner not previously proposed. Solutions for GPU and HPDP rely exclusively on source code to achieve reconfiguration, which means it can only be modified by proving a new software library.
¹ https://en.wikipedia.org/wiki/SpaceWire

At least one lock-free ring buffer in the CPU may be used to orchestrate the processing elements according to the configuration file, for example by retrieving and outputting streams and associated memory to the processing elements. This use of lock-free ring buffers is different from their common use in buffering data to be processed. As is known in the art, a lock forces serialisation. Processing nodes return the output asynchronously, meaning that the output can arrive in a different processing thread at any time, this implies the need of multi-threading programming. With the ring buffer being lock-free the reception of output to the processing nodes is optimal in terms of performance.

Any of the methods described here may be provided in the form of a computer readable medium for implementation in a computing system, for example software to implement the optimiser. The medium may be either transitory such as a software download, or stored in some way so as to be non-transitory.

The data processing described here may have many applications. It has been developed particularly for use in space, for example on-board satellites, but may be equally useful in ground-based implementations. The instructions or algorithm may comprise a DNN which may be for processing or analysing an image, or image data, for example to identify features in the image. A DNN consists of an interconnected number of layers. While the order in which the DNN layer are to be executed is fixed, they can be paralysed and distributed in the processing elements. The optimiser uses genetic algorithms and convex optimisation or other suitable mathematical processes to find the optimal distribution. In order to do so, it requires information about the cost of executing the layers in the initial 'naive' distribution of the layers. (This technique is also known as off-line optimisation)

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

The features described in the following may be combined as appropriate, as would be apparent to a skilled person.

### Brief Description of the Drawings

Embodiments of the invention will be described, by way of example, with reference to the following drawings, in which:
Figure 1 is a schematic diagram showing a central processing unit (CPU) executing a simplified (sequential, while real algorithms are usually parallel graphs) set of instructions to process data;
Figure 2 is a schematic diagram similar to figure 1 showing a GPU operating to execute a simplified set of kernels to process data;
Figure 3 is a schematic diagram similar to figure 2 showing a specific example in which the instructions comprise a simplified DNN;
Figures 4a and 4b are schematic diagrams illustrating the use of sequential streams and parallel streams respectively;
Figure 5 schematically shows the operation of a GPU with its built in stream scheduler;
Figure 6 schematically illustrates an example of CPU orchestration of kernels and streams using a GPU grid as an example;
Figure 7 shows an example similar to figure 6 using a grid of HPDP nodes;
Figure 8 shows a plurality of lock free ring buffers orchestrating streams in a GPU grid;
Figure 9 shows an example implementation of a computing system using an optimised configuration file;
Figure 10 shows an example implementation of an offline optimisation process;
Figure 11 is a flowchart showing different connection types of one operator output to the next operator input, which may take place at a single or multiple processing elements;
Figure 12 is a schematic diagram showing how a GPU scheduler may interact with one or more ring buffers implemented in a CPU and with several streams in the GPU;
Figure 13 is an example signal flow and orchestration between components of a CPU and a HPDP backend; and
Figures 14a and 14b show example methods for determining a configuration file to optimise execution of an algorithm;
Figure 15 is a schematic diagram illustrating how the methods described here may be implemented to optimise various kinds of computing resource;
Figure 16 is a schematic diagram illustrating the operation of an example optimiser.

Common reference numerals are used throughout the figures to indicate similar features.

### Detailed Description

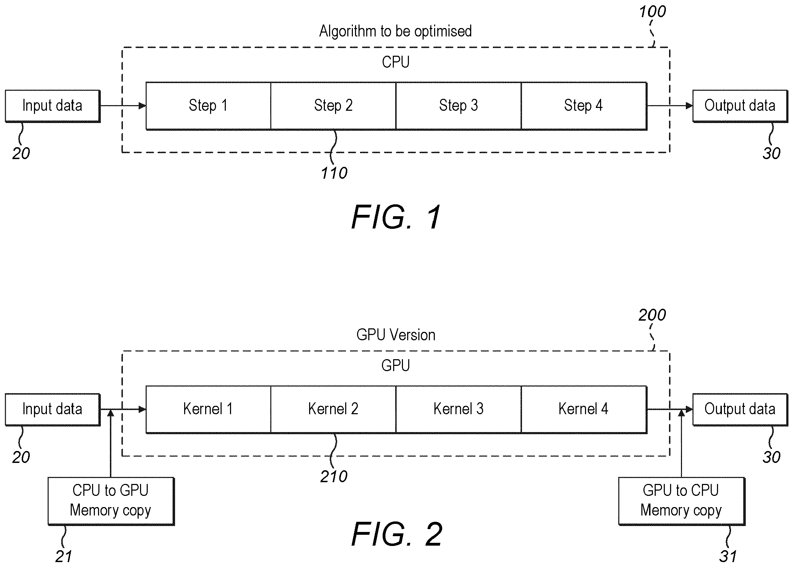

Figure 1 is a schematic diagram showing a CPU 100 executing a simplified algorithm in the form of a set of instructions 110 to process data. A CPU 100 can execute a set of instructions 110, which may be divided into steps as shown in figure 1. The set of instructions 110 can be executed in response to input data 20 received by the CPU. The CPU can be configured to output data 30 in response to executing at least one of the instructions in the set of the instructions 110. Depending on the nature of the instructions, the efficiency and speed at which the instructions can be executed by the CPU may be limited. It is important to notice that, for clarifty of explanation reasons, this flow corresponds to a simplified sequential algorithm. Real-life algorithms and DNN are usually graphs with parallel branches of operators, which are harder to reflect in a diagram.

In order to accelerate the execution of the instructions comprised in the algorithm a number of techniques are possible, including the use of co-processors, an array processor or a hardware accelerator such as a GPU, all of which are collectively referred to here as "accelerators". GPUs and other accelerators may require memory copy of the input/output data at the beginning and end of the execution of the instructions, in other words at least two copies, particularly if the GPU is embedded alongside a CPU. It should be noted here that there are four types of memory copy: - CPU to CPU (required for the ring buffer), - CPU to co-processor (for the scheduling), - co-processor to CPU (for the scheduling and final result) - co-processor to co-processor (where the genetic algorithm or convex optimisation tries to reduce these copies to the minimal possible amount).

In the following, methods and systems are described with reference to a GPU and HPDP by way of example. Similar methods may be implemented with other apparatus in which a CPU orchestrates the operation of multiple processing elements.

The instructions may be converted for the purpose of execution by the accelerator. For example in the case of a GPU the instructions may be allocated to kernels which implement the instructions, for example mathematical functions, in a suitable language. In the case of a GPU the language may be CUDA, developed by Nvidia.

Figure 2 is a schematic diagram similar to figure 1 showing a GPU 200 operating to execute a set of kernels 210 to process input data 20 and output data 30. The operation of the GPU is orchestrated by a CPU, not shown in figure 2. Each kernel may comprise multiple instructions, for example corresponding to a layer of a DNN. As indicated in figure 2, if the GPU operates alongside a CPU, the CPU 100 and GPU 200 may have separate memories, and therefore the input data is supplied from a CPU to GPU memory copy 21 and a copy 31 of the output data is supplied from the GPU memory to the CPU memory.

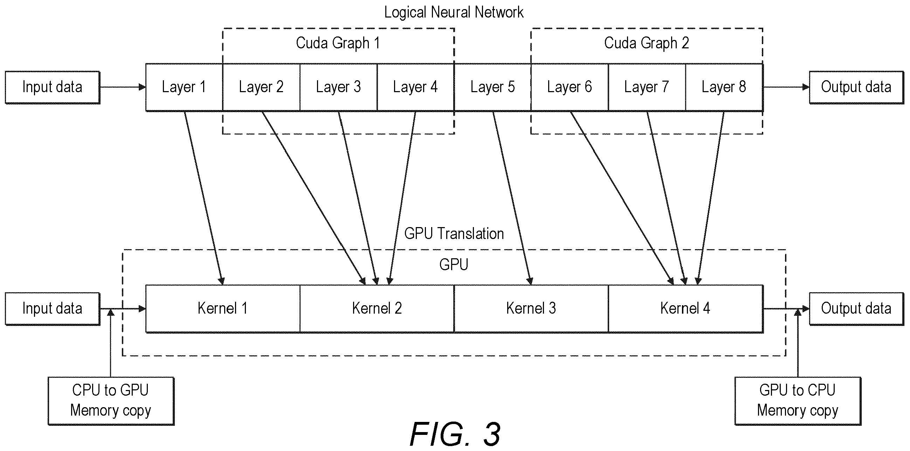

Figure 3 is a schematic diagram similar to figure 2 showing a specific example in which the instructions comprise a DNN. Selected DNN layers are defined as a CUDA graph, two of which are shown in figure 3. A CUDA graph may be launched from a GPU kernel. Figure 3 shows that layers 1 and 5 are allocated to respective GPU kernels whereas layers 2-4 and 6-8 are each defined as a CUDA graph allocated to kernels 2 and 4 respectively.

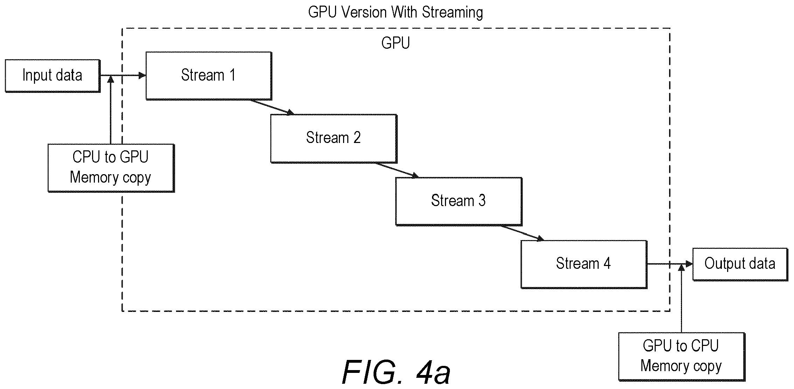

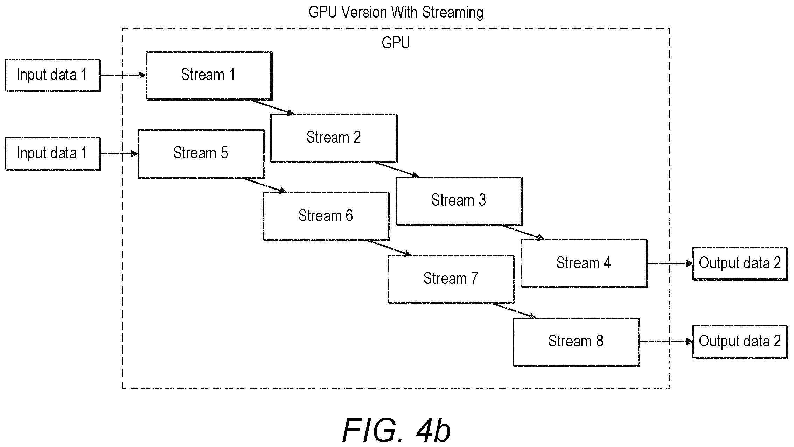

In order to further accelerate processing in a GPU, parallelisation via streams may be used. A stream comprises a kernel and a block of memory that the CUDA scheduler will execute in a portion of the GPU assigned by the scheduler itself. Streams are illustrated schematically in figures 4a and 4b. A sequential stream is shown in figure 4a and two parallel streams are shown in figure 4b. In the methods described in the following, for optimisation in a GPU, a specific type of optimiser is used to define the number of streams. In the case of a GPU, an optimiser may also determine the CUDA graphs. In practice any number of parallel streams may be used, for example depending on the size of accelerator, memory available and the instructions, i.e. algorithm, e.g. DNN, to be executed. In figure 4b identical streams are shown for simplicity but it will be appreciated that they may not be identical in practice.

In the case of a GPU, a stream may be part of a unit explained further below comprising a kernel, input and output memory.

When running kernels without streams, kernels are executed one at a time, e.g. sequentially, which may result in GPU underutilisation (a.k.a., low occupancy). Higher occupancy is desirable in order to achieve better latency or throughput. With streams, several kernels can be run in parallel. A similar approach can be applied to other multiple processing elements, such as nodes in the case of HPDPs, however, the concept of streams is only built-in in GPUs and in other cases ring buffers presented here are used.

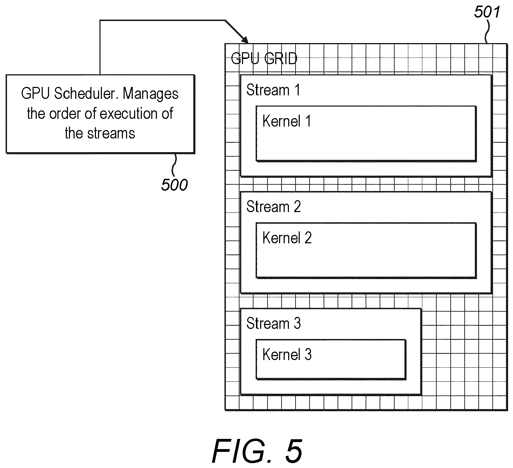

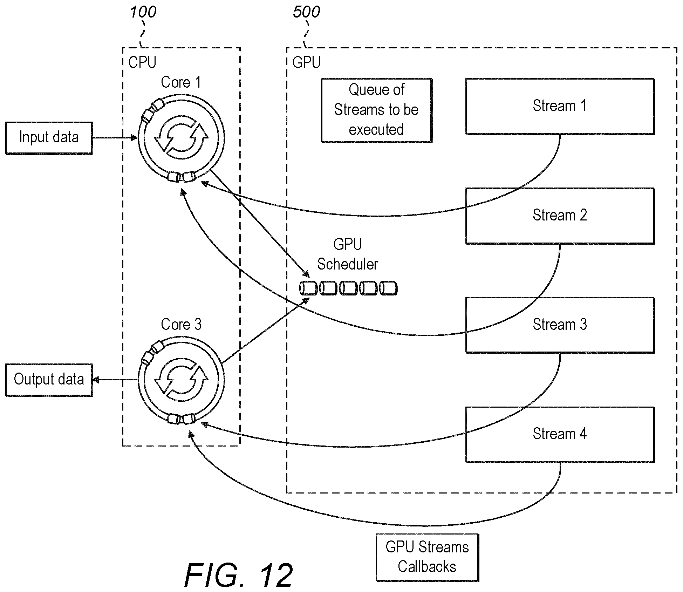

As shown schematically in figure 5, GPUs and other accelerators may operate with a built-in scheduler 500. The scheduler 500 has an internal queue of streams for execution and is in charge of sending new streams to a GPU grid 501 and assigning the portions of the GPU to be used. The grid 501 schematically represents multiple GPU kernels, in other words one GPU which may comprise several thousands of processing elements, or kernels. The kernels are grouped in streams. The scheduler 500 manages the order of execution of the streams, three of which are shown in figure 5 each comprising one kernel. In practice each stream may comprise multiple kernels and at least some kernels may correspond to CUDA graphs, e.g. multiple NN layers as shown in figure 3. Streams may be used in an analogous manner with other accelerators such as HPDPs for example where nodes are analogous to kernels. In the methods described here, a GPU scheduler may be orchestrated from a CPU implementing one or more lock-free ring buffers, described further below with reference to figure 12.

The scheduler 500 typically does not guarantee optimal occupancy. This may be taken into account in the writing of the algorithm. Artificial intelligence, machine learning and neural network algorithms tend to have low occupancy.

There is described in the following a method in which an optimiser is used to determine a configuration file for a computing system in which a CPU orchestrates the operation of multiple processing elements. The optimiser may use a genetic algorithm or any other algorithm used for providing solutions for optimisation. The processing elements may be HPDP nodes, GPU kernels or others as will be familiar to those working in this field.

The optimiser may receive optimisation criteria relating to the operation of the algorithm and data relating to the running of the algorithm in the computing system according to a naive configuration file. The optimiser may adjust the naive configuration file to output an optimised configuration file according to the optimisation criteria, for example using a genetic algorithm. This may be done in several iterations until no further improvement according to the optimisation criteria is achieved by further adjustment. In the case of convex optimisation, the process varies so that the number of iteration is very small (less than 10) and they are only required to adjust the estimated performance to the real performance.

The CPU may use one or more lock-free ring buffers, also known in the art as event loops, to orchestrate the operation of the processing elements.

A configuration file for the computing system, whether the naive configuration file or an adjusted configuration file determined by the optimiser, may include one or more of various instructions for the orchestration of the operation of the processing elements. For example the configuration file may map one or more processing elements to one or more lock-free ring buffers. The configuration file may delegate processing elements such as GPU kernels to streams.

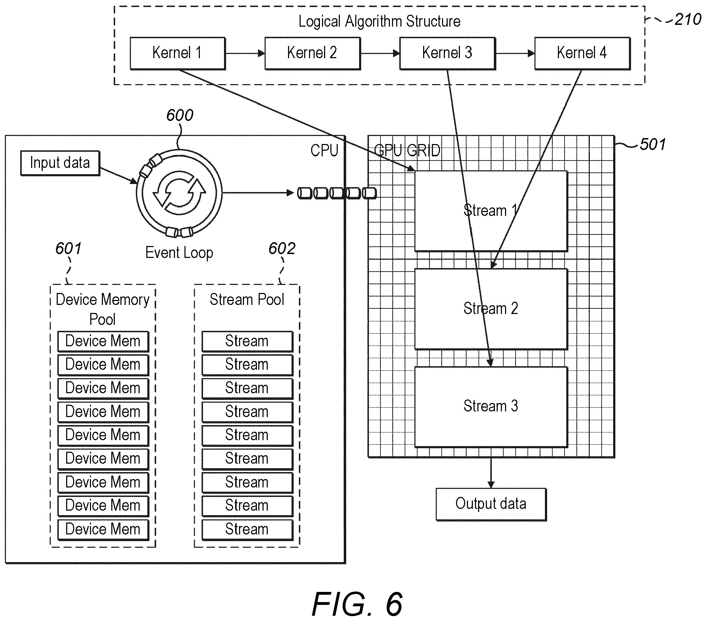

An example of orchestration of kernels and streams is illustrated schematically in figure 6 using a GPU grid 501 as an example of multiple processing elements. A GPU such as GPU 200 (figure 2) has an associated device memory pool 601 and stream pool 602. All of the memory pools described here are smart pools unless otherwise stated, meaning that they use C++'s smart pointers to manage the object pool. Each pool 601, 602 comprises memory space suitably configured or partitioned to accommodate device memory and streams. The term "device" used here is a GPU concept referring to the GPU co-processor and is more generally applicable to any accelerator. Any of the methods described here may comprise storing streams in a memory pool. A lock free ring buffer may retrieve a stream from a memory pool and output it to a processing node for execution. In order to execute a kernel in a stream, one element from the memory pool 601 and one element from the stream pool 602 is retrieved by the ring buffer 600. They are then associated with an pre-existing kernel which is triggered for execution of the stream.

Once a set of instructions has been converted into a set of kernels 210 they may be allocated to streams as described with reference to figures 4a and 4b. The example of figure 6 uses a single lock free ring buffer 600. In general a lock-free ring buffer may orchestrate execution of streams by the processing elements according to the configuration file. In the example of figure 6, the lock free ring buffer 600 can receive streams from the stream pool 602 and output the streams to the GPU grid 501. The lock free ring buffer 600 may output the streams in series. As a result of the ring buffer 600 being lock-free the output is not necessarily in the order in which it is programmed in the algorithm. Thus as shown in figure 6 units may be output from the ring buffer 500 in a different order from the order in which they are programmed, each unit comprising device memory and a stream. Two non-consecutive pairs of units in the ring buffer 600 are output as a series of four consecutive units. It will be noted that kernel 2 is not allocated to a stream in figure 6. This is because not all kernels are executed at all times. In other words in some iterations of an algorithm some kernels, e.g. algorithm operators such as DNN layers, are not executed.

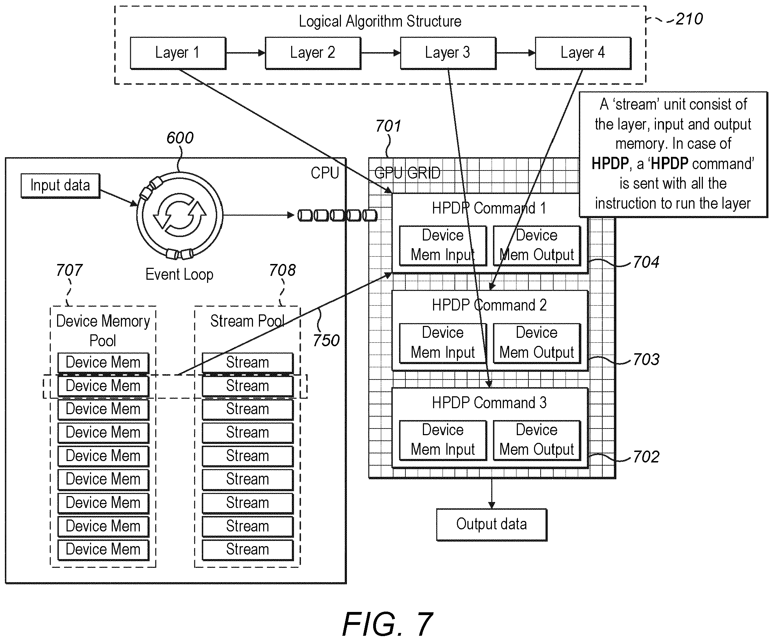

Figure 7 shows an example similarto figure 6 using a grid 701 of HPDP nodes. A HPDP has an associated device memory pool 707 and stream pool 708. A set of layers 210 is allocated to stream units 702, 703, 704. In this case, which is not only applicable to HPDP, each stream unit comprises a kernel and input and output memory. A HPDP command is sent to a node in the grid 701 which is to execute a layer, with instructions to run the layer.

Arrow 750 in figure 7 shows a stream with allocated device memory associated with HPDP command 1. In practice this will be via the ring buffer 600 in the same way as with figure 6.

The architecture shown in figures 6 and 7 may be operated as follows:

A C++ object is created that points to a memory address in hardware memory.

A smart memory pool is created, e.g. 601 or 707, that holds several of these objects.

When a new request to run an instruction comes, for example as input data to the lock free ring buffer, the lock free ring buffer 600 requests the pools to pass one object for the input and another one for the output and sends it all together with a stream from the stream pool to the GPU stream (figure 6) or HPDP node (figure 7). In the case of GPU the request will be to run a kernel, in the case of HPDP the request will be to execute a node.

Once the instruction has been executed, the input memory is released back to the pool and the output memory is used as input object to the next kernel (the output of one kernel is the input of the next kernel in the algorithm).

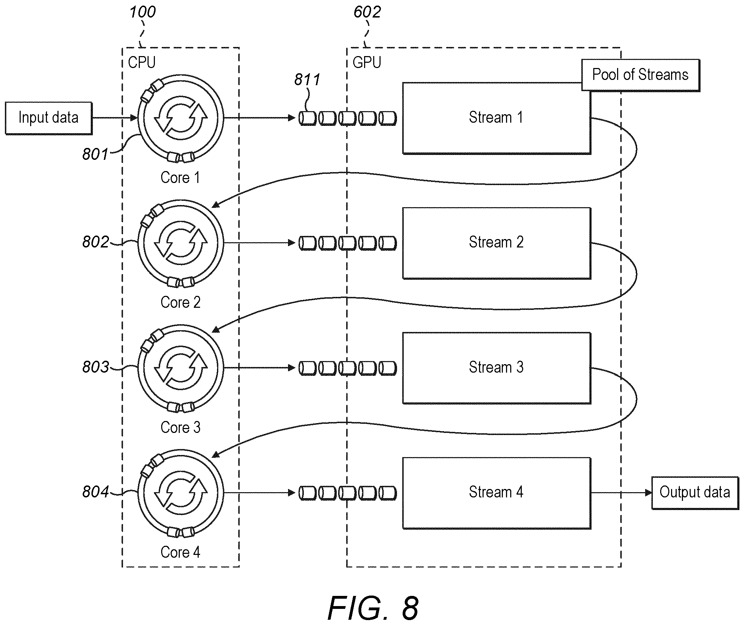

This example series of operations is illustrated in figure 8 with reference to a GPU as an example, but is equally applicable to HPDP and other accelerators.

Figure 8 shows a CPU 100 implementing a plurality of lock free ring buffers 801-804 in respective CPU cores. Each ring buffer may be associated with a respective CPU core to improve overall performance although this is not essential. Ring buffer 801 outputs 811 a stream from a GPU pool of streams such as pool 601, denoted as stream 1.

Each of the plurality of lock free ring buffers 801-804 is configured to send a stream to the GPU grid 602. The GPU further includes a scheduler, not illustrated but known in the art, which schedules execution of tasks in the GPU. The output of one stream can be connected to an input of a lock free ring buffer, for example the output resulting from execution of stream 1 may be input to the next ring buffer. Accordingly, the output of the previous stream can be next stream. Other accelerators may be implemented in an analogous manner.

### Example end-to-end process

An end to end process using any of the methods described here, using an example where the instructions to be optimised comprise an AI algorithm, may be notionally divided into three flows:
**a)** An optimisation process which may use one or more genetic algorithms (GA) and/or any other suitable algorithm for solving optimisation problems, also referred to here as an optimiser/solver.
**b)** Loading of the AI algorithm into a CPU / HPDP / GPU system.
**c)** Execution of the Ai algorithm for the user data (e.g., images from camera).

### Optimisation:

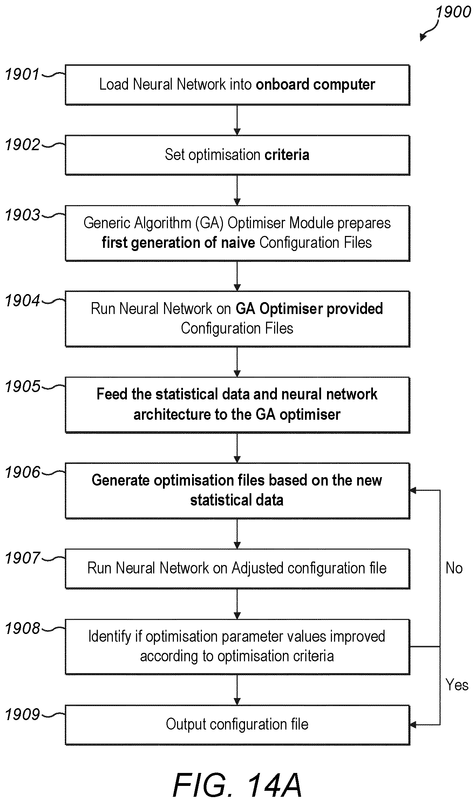

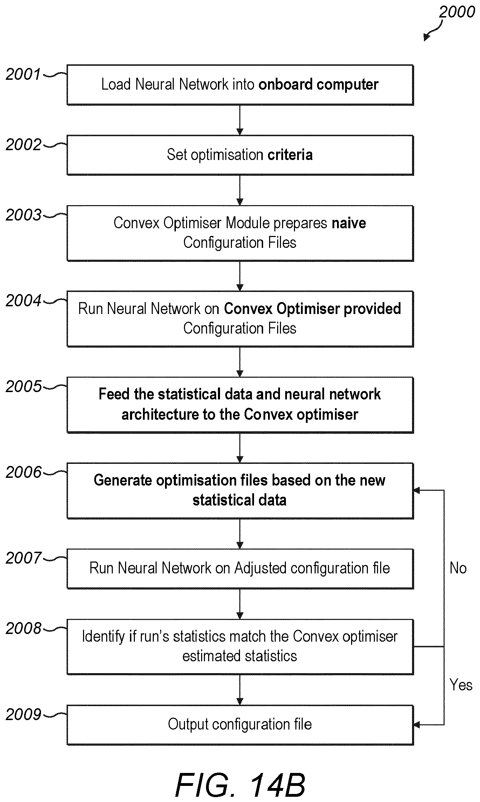

An example optimisation process is described with reference to figure 14 described in more detail below. In general the optimisation process may comprise the following steps:

An AI algorithm is loaded into a CPU computer with a naive configuration. This may be any standard AI format file for example such as an Open Neural Network Exchange ONNX file.

An initial default distribution of the neural network layers among the HPDP nodes or GPU kernels or other processing elements is determined.

An optimiser performs some dry runs of the AI algorithm with slight variations of the naive configuration. The variations may be designated by a genetic algorithm or convex optimiser or other optimiser known in the art. In the case of GPU for example the optimiser may be a stream distribution optimiser.

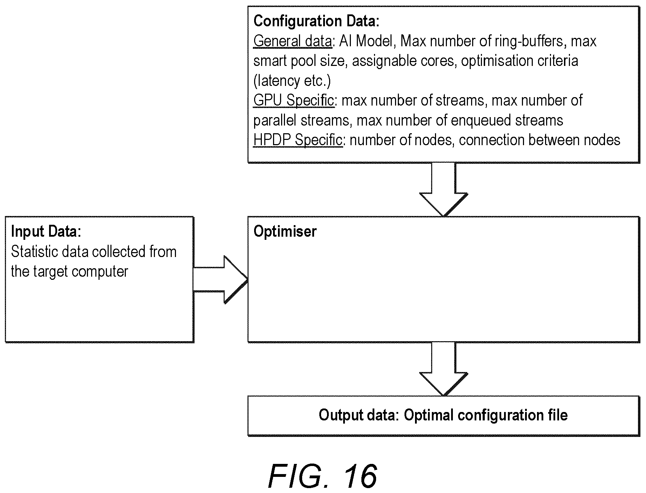

The optimiser, using genetic algorithms for example, optimises the execution of the ONNX model. The optimiser operates using configuration data, receives input data and outputs output data, as illustrated in figure 16. The configuration data may comprise the ONYX model and any one or more of: the size of memory of the plurality of processing elements (e.g. kernels in the case of GPUs); and a number of lock-free ring buffer(s) available. with the input data may comprise statistical data collected from executing the AI algorithm on a target computer (and target co-processor or other accelerator) with a naive configuration, e.g. dry runs. The output data comprises the optimal configuration, for example in a JSON file format.

The result is a configuration file that, together with the file describing the AI algorithm, for example ONNX format file, are able to execute the AI model in an optimal manner on the processing elements, e.g. GPU kernels or HPDP nodes. The configuration file has a common part and a part that is specific to the accelerator, e.g. GPU, HPDP or other accelerator. A GPU specific part may contain information such as association of GPU streams to cores, number of parallel streams (stream pool size), device pool size and other information as will be familiar to those skilled in the art.

An example configuration file may comprise any one or more of mapping lock-free ring buffers to cores, mapping lock-free ring buffers to processing elements, and mapping kernels to processing nodes, specific examples for GPU and HPDP may look like this, in which the lock-free ring buffers are referred to as event_loops:

```
       number_of_cores: 4,
       event_loops_core_map:
        - eventloop1: 0,
        - eventloop2: 1,
        - eventloop3: 2,
        - eventloop4: 3,
       ******* HPDP Specific part *******event_loop_hpdp_node_map:
        - HPDPNode1: eventloop1,
        - HPDPNode2: eventloop1,
        - HPDPNode3: eventloop2,
        - HPDPNode4: eventloop3,
       layer1: HPDPNode1,
       hpdp_group1: HPDPNode1, HPDPNode2,
       ****** GPU Specific part ******
       stream_pool_size: 4
       device_pool_size: 10
       stream_to_event_loop_mapping:
```

### Loading:

The loading of the AI algorithm according to the optimised configuration file may comprise the following steps:

Loading of the AI algorithm, for example a standard AI format file such as ONNX, into a CPU computer comprising the multiple processing elements.

In the case of GPU, an optimiser may create an optimal number of streams that will be executed in parallel, associate memory with the streams and determine an optimal number of ring buffers that will orchestrate the streams, for example in a CPU.

In the case of HPDP, an optimiser will distribute the layers of the AI algorithm, or operators of an algorithm, to different HPDP nodes so that the execution of the algorithm is optimal. It is possible that even parts of an operator are executed in different HPDP nodes.

It will be appreciated that the execution of any algorithm structured to comprise multiple operators may be optimised in an analogous way.

Once this structure is created, the system is ready for execution.

### Execution:

Using an example of processing camera images, the execution of the inference may comprise the following steps:
- Receive request from user to process data (e.g., new image from camera)
- The now-optimised AI algorithm publishes the image to a ring-buffer 'publisher layerA'
- 'subscriber layerA' being the other kernel of a publisher/subscriber pair receives the image and sends the image, the first AI operation (layerA), input data address, and output data address to the GPU Stream or HPDP node
- 'subscriber layerlA' is notified once the GPU Stream or HPDP node has completed the processing and the output data is ready
- 'subscriber layerA' sends the output data to one of the follow three options:
   ∘ the 'publisher kernelB' (only option in GPU) (via middleware in the case of HPDP)
   ∘ Another HPDP node directly (bypassing the ring-buffer)
   ∘ To the same HPDP directly (bypassing the ring-buffer)
   ∘ In the case of GPU, direct transfer in the GPU is done via CUDA Graphs (which is used by the optimiser as well as a way to increase performance)
- 'subscriber kernelB' received the output data 1 of kernelA, kernelB and output data address to the HPDP node.
- ....
- 'subscriber N' receives the output data of kernelX which is sent to the user as the result of the AI algorithm.

In an example implementation, the optimised neural network may be used for processing images, or raw image data, especially from satellites, to identify particular features usually but not exclusively on Earth. There are many examples of features that are of interest to different parties such as wildfires, flooding, vessels at sea, military activities, weather patterns, other space craft and many others. Therefore some or all of the computing architecture described here may be installed onboard a satellite.

It will be appreciated that different performance criteria relating to the execution of instructions such as a DNN may be optimised using any of the methods described here, according to various different criteria. Example parameters may comprise but are not limited to any one or more of memory usage, latency, power or throughput of the plurality of processing elements. Example criteria may therefore comprise minimising or maximising any of these parameters as appropriate.

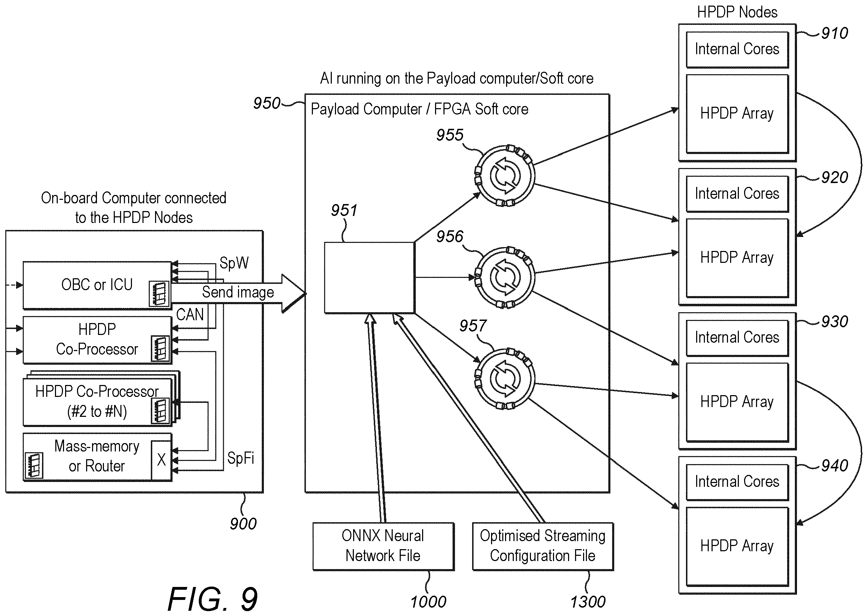

Figure 9 shows an example implementation of a computing system in which any of the methods described here may be implemented. It should be noted that this example is HPDP specific but may be adapted for other accelerators.

Figure 9 shows on the left an on-board computing system 900 comprising an onboard computer connected to HPDP nodes in the form of HPDP co-processors. 910-940 and mass-memory or Space qualified middieware like SpaceWire (SpW) as is known in the art.

Figure 9 shows on the right how an optimised AI algorithm may be implemented in a payload computer or FPGA soft core 950 which may be part of the onboard computing system. A payload computer or computing resource may be used for implementing specific tasks requested of a satellite, such as supply of images or image data. Thus the payload computer 950 may be logically separate from, for example, computing resource used for maintaining orbit, steering and other control operations.

The payload computer 950 comprises algorithm orchestrator 951 which is uploaded with the set of instructions whose implementation is to be optimised, in this example an AI algorithm optionally in standard form such as ONNX 1000, and a configuration file 1300 such as described above, for optimal execution of the AI algorithm 1000, for example according to certain criteria which may comprise latency or any other criteria discussed elsewhere here. The example payload computer 950 configuration shown in figure 9 comprises three lock-free ring buffers 955-957. It should be noted that the output from the algorithm orchestrator 951 may not always be routed via middleware to a lock-free ring buffer and it is possible for some output to be direct from one or more of the processing nodes 910-940 to another, as indicated by the arrows on the right of the figure. As shown in figure 9, in an example implementation an image to be processed may be output from the onboard computer 900 to the payload computer 950.

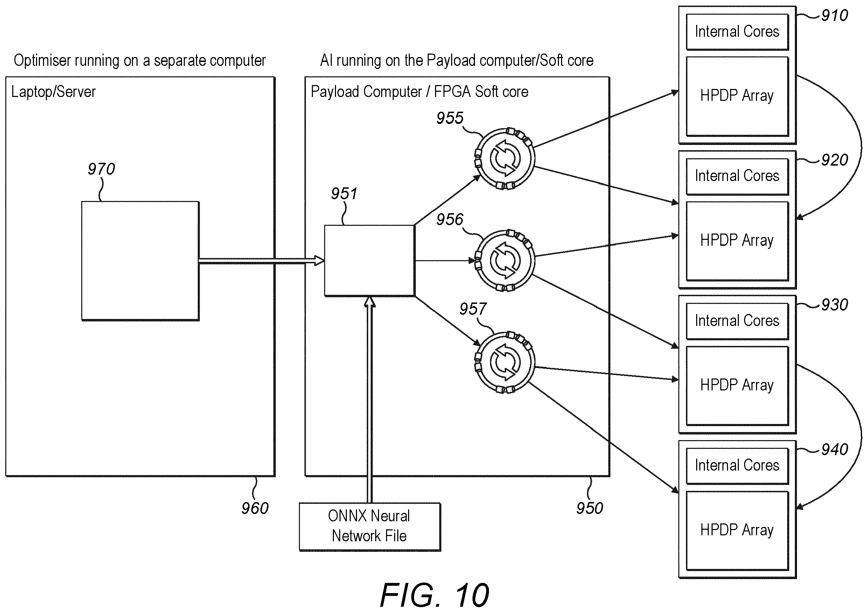

Figure 10 shows an example implementation of the optimisation process, again HPDP specific but adaptable for other accelerators. In this example an optimiser 970 is run on a separate computer 960 from e.g. a satellite payload computer 950. In this example a configuration file may be output from the computer 960 executing the optimiser, and algorithm orchestration according to the configuration file may be implemented on the payload computer 950. The lock-free ring buffers 955-957 instantiated according to the configuration provided by the optimiser, e.g. genetic algorithm, convex optimiser or other, in the payload computer 950. The separate computer 960 may be ground-based.

The example shown in figures 9 and 10 uses two interconnected nodes, or the sending of the next NN layer to the same node to avoid the need to refer back to the CPU. For GPU, the layers may be grouped into CUDA graphs as noted above. Then they could all be run together to avoid the need to go back to the CPU.

The optimiser 970 may be configured to determine the configuration file discussed elsewhere here based on input features. In an example implementation the input features may include, but are not limited to, the instructions, for example a neural network whose operation is to be optimised, the number of layers of the neural network, the architecture of the connections of the neural network, the number of streams available to execute the neural network.

The input features may additionally include, but are not limited to, the following: the number of lock free ring buffers, a memory size of the lock free ring buffers, the number and/or memory size of array processors or other processing elements, a memory size of a stream pool in the case of GPU.

The optimiser may use a genetic algorithm configured to determine a configuration file that optimises an optimisation parameter of the CPU 100 and/or the processing elements in the accelerator according to predetermined criteria. In the case of a GPU the configuration file may include a schedule of kernels. Optimisation criteria may include any one or more of: a latency of the CPU 100 and/or processing elements, power consumption of the CPU 100 and/or processing elements, throughput of the CPU 100 and/or processing elements, memory usage of the CPU 100 and/or processing elements, CPU 100 usage, processing element usage. In the specific case of GPU, the optimisation parameters may include usage of one or both of the stream pool and device memory pool, both of which are memory spaces. In the specific case of HPDP, the optimisation parameters may include layer to HDPD node configuration and grouping of interconnected HPDP nodes.

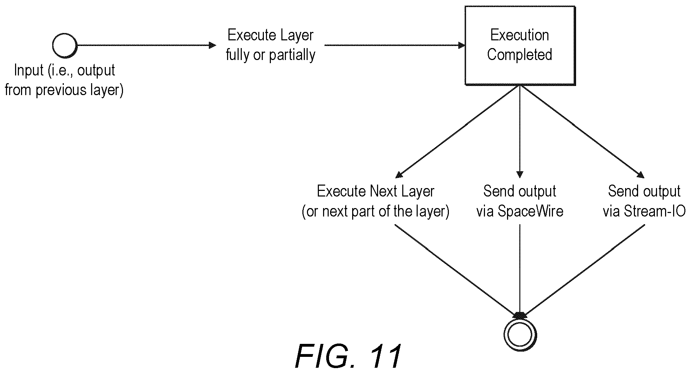

The HPDP nodes 910-940 may be in any suitable configuration, some examples of which are explained with reference to figure 11. As shown in figures 9 and 10, HPDP nodes may be directly connected, in other words by stream input/output connection, or via "SpaceWire" spacecraft communication network based in part on the IEEE 1355 standard of communications. All HPDP nodes are connected to the computer, payload or onboard, via SpaceWire. The ring buffers are implemented on the payload computer whereas the DNN is executed in the HPDP nodes. It will be appreciated that an analogous configuration may be provided for GPU or other accelerators.

The input data used by the optimiser 970 to calculate the optimal configuration may comprise additional parameters to those mentioned already including but not limited to parameters of the processing nodes such as one or more of network topology, also known as architecture, memory usage and memory capacity.

The processing nodes described here may comprise any suitable computing resource including but not limited to array processors, HPDP nodes, GPU nodes, Ramon chips RC64, and the 22FDX process nodes of ETH Zurich.

An example configuration file was described in the foregoing. In the case of a GPU, the configuration file may comprise a schedule of kernels of an AI or other algorithm whose performance is to be optimised. An AI algorithm will typically require a specific order of execution. As mentioned above, in the case of GPU, the kernels can be executed in series or parallel. The configuration file may indicate to the CPU 100 and/or accelerator that the kernels are executed in series or parallel. The methods described here use optimisation of accelerator, e.g. co-processor resources, for example by parallelisation of at least some of the algorithm operators, e.g. layers of a neural network, in order to reduce idle time from the co-processor elements and therefore increase performance of the execution of the algorithm.

The configuration file may describe the connections between the components of the CPU 100 and the processing elements. The configuration file may comprise any one or more number of cores of the CPU 100; CPU cores to lock free ring buffer mapping; lock free ring buffer to processing node mapping. The configuration file is used to orchestrate the execution of the neural network or other algorithm in the accelerator, e.g. co-processor.

In the case of HPDP, the determined connections in the configuration file are determined by an optimiser to optimise one or more parameters.

The optimiser needs statistical data of execution of the algorithm with a default naive configuration in order to find the optimal configuration file. The term "naive" is well known in the art. It is used here to refer to any default or starting configuration used as a base for optimisation.

The lock free ring buffer to processing element mapping describes how the lock free ring buffers are connected to the processing elements. The connections determine which lock free ring buffer outputs to which stream in GPU or which array processing node in HPDP.

The configuration fille maps HPDP nodes or GPU streams to ring buffers. The reasons is that the ring-buffers, implemented in the CPU, perform the orchestration. There are performance benefits in having a number of nodes or streams associated with the same core (memory sharing, etc).

As noted above the optimiser may implement a genetic algorithm. The genetic algorithm may be configured to optimise any one or more of latency, power consumption, throughput, array processor memory usage and CPU usage and other parameters as will be familiar to those skilled in the art. The optimisation parameters may be optimised using a fitness function. The input features to the optimisation neural network may comprise a set of streams in the case of GPU, the number of lock free ring buffers in the CPU 100, the memory size of the processing nodes in the case of HPDP.

Figure 11 is a flowchart showing operations that may take place at a single processing element, e.g. GPU kernel or HPDP node, implementing a layer of a neural network. Input data is received, which may be for example from a previous layer. The layer is fully or partially executed. Once the full or partial execution is completed, the next operation may depend on the configuration determined by the optimiser. The same processing element may execute the next layer or next part of a layer in the case of partial execution, or the output may be to a next layer via a communication network such as SpaceWire or stream input/output. The next layer may be implemented at the same processing element or a different processing element.

Figure 12 is a schematic diagram showing how a GPU scheduler 500 may interact with one or more ring buffers implemented in a CPU 100. As explained with reference to figure 6, in order to execute a kernel in a stream, one element from a memory pool and one element from a stream pool are retrieved by a ring buffer. They are then associated with an allocated kernel according to the optimised configuration file which is triggered for execution of the stream.

Referring again to figure 12, ring buffers implemented in the CPU 100, for example in respective CPU cores, output elements from the memory and stream pools (not shown in figure 12) to the GPU scheduler 500 which maintains a queue of streams and schedules execution of the streams. Figure 12 also shows curved arrows indicating callbacks from the streams to the ring buffers from which the streams were retrieved.

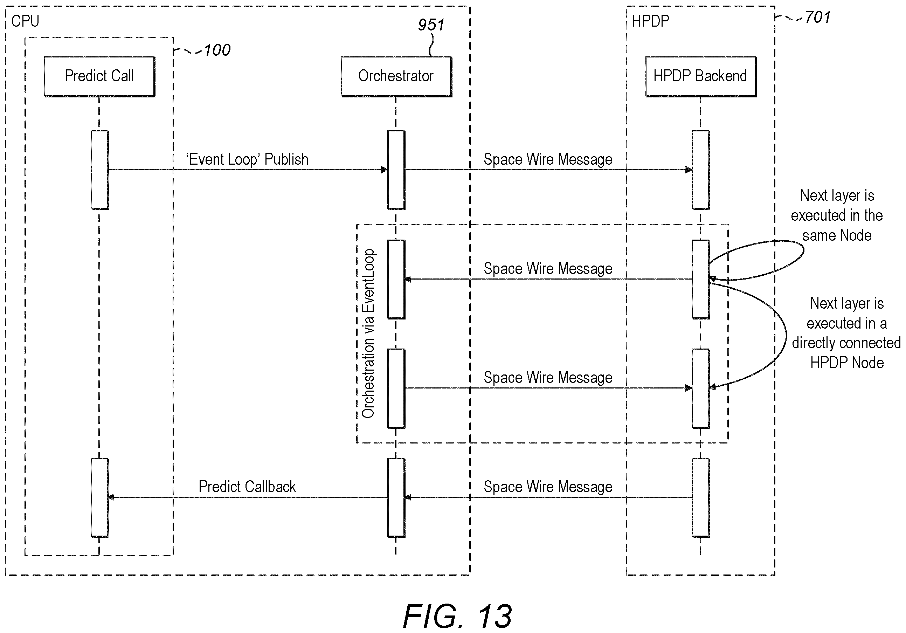

**.** A signal flow may begin with an "event loop" publish request from one of the ring buffers which is passed to the orchestrator 951. The orchestrator sends a message, for example via SpaceWire, to the HPDP grid 701. In the ca se of a neural network or similar algorithm, layers are executed at HPDP processing nodes. Subsequent layers may be executed in the same or a different node according to the configuration determined by the optimiser 970. Figure 13 shows communication direct from one HPDP node to another, which avoids the need to refer back to the CPU for further instruction. Figure 13 also shows communication from one node back to the orchestrator which then instructs a different node, for example via SpaceWire. On completion, a message is returned to the orchestrator which returns a predict callback message to the CPU as is known in the art.

Figures 14A and 14Bshow a method 1900 and 2000 for determining a configuration file, executable by a plurality of processing elements, to optimise execution of an algorithm such as a neural network. The method 1900 may be performed by a Genetic Algorithm optimiser for example and the method 200 by a convex optimiser.

In step 1901 and 2001, the method comprises loading the algorithm, in this example a neural network, to a computing system comprising CPU and multiple processing elements, for example an onboard computer with co-processor.

As noted above the neural network can be an ONNX file.

In step 1902/2002, the method comprises setting one or more optimisation criteria, for example according to any one or more parameters including but not limited to those mentioned above. Thus the optimisation parameters may include at least one of the following: a latency of the CPU 100 and/or processing elements, power consumption of the CPU 100 and/or array processors 200, throughput of the CPU 100 and/or processing elements, memory usage of the CPU 100 and/or processing elements, CPU 100 usage, processing element usage. It is noted that this list is not exhaustive. The skilled person would understand that other optimisation parameters can be selected depending on the requirements of the task being performed by the neural network or other algorithm.

In step 1903/2003, the optimiser creates one or several naive configuration files.

In step 1904/2004, the algorithm, e.g. neural network, is run using the naive configuration files and performance statistics are collected.

In step 1905/2005, parameters for operation of the optimiser are fed to the optimiser. This may include statistical data and algorithm architecture, in this example neural network architecture. The optimiser may analyse these parameters in order to determine the configuration based on the optimisation criteria. For example, the optimiser 970 evaluates an average latency time during the execution of the layers of the neural network 1000. The optimiser 970 can evaluate the power consumption of the system, e.g. CPU plus accelerator, during the execution of the layers 210 of the neural network 1000. The optimiser 970 can evaluate the throughput performance between the CPU 100 and the processing elements during the execution of the neural network 1000. The optimiser 970 can evaluate the occupancy percentage of the processing elements during the execution of the neural network 1000. The optimiser 910 can evaluate the CPU usage percentage of the CPU 100 during the execution of the neural network 1000.

In step 1906/2006, the optimiser generates a new set configuration files based on the input statistical data. Different sets are created in 1906 and 2006: in the former is the next generation of the genetic algorithm, in the 2006 is the best configuration estimated in the statistical data.

In step 1907/2007 the neural network 1000 is executed on the adjusted configuration file. In flow 1900 the flow then goes back to step 1906 to determine whether a further improvement has been achieved. Steps 1906, 1907, 1908 are repeated until there is no further improvement, at which point the result of step 1906 is no and the configuration file is output at step 1909 as the optimised configuration file.

In step 1908 the optimiser determines whether the run of the neural network has resulted in an improvement of optimisation parameter values according to the criteria determined at step 1904. The SDO 910 can identify if the optimisation parameter values have improved using a fitness function. The fitness function can determine with the optimisation parameter values meet or exceed a fitness value. In step 2006 the optimiser determines if the obtained statistics match the estimated ones.

In step 1909, if there has been some improvement of optimisation parameter values, the optimiser 910 (further) adjusts the configuration file according to the genetic algorithm. The genetic algorithm can implement selection, crossover and/or mutation to adjust the configuration file to optimise the parameter values. It is noted that the skilled person would understand that various optimisation methods could be implemented to improve the optimisation parameters values.

In the examples described above, the optimisation may be performed by a server or laptop or other computer external to the computing system which will implement the optimised algorithm. The algorithm itself is typically executed in a remote target system, in the examples described here the target system is in space and the optimisation is performed on the ground.

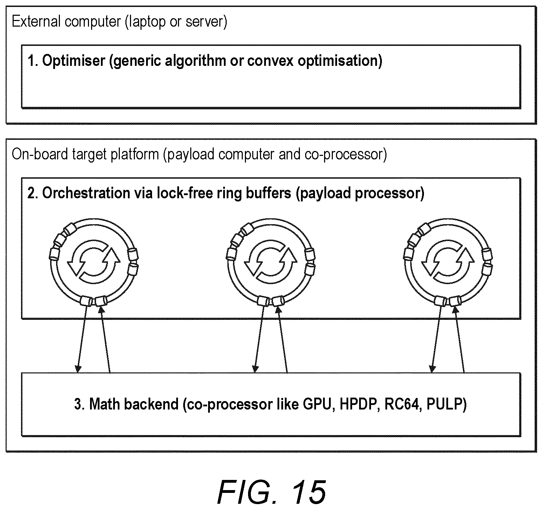

As noted above, the processing nodes described here may comprise any suitable computing resource including but not limited to array processors, HPDP nodes, GPU nodes, Ramon chips RC64, and the 22FDX process nodes of ETH Zurich. This is illustrated in figure 15 which shows an optimiser which may operate using a genetic algorithm or convex optimisation or other suitable optimisation process. The target platform may be onboard, for example onboard a computer and may comprise any payload computer and co-processor. The orchestration described above may be via ring buffers which may be implemented in the payload computer. The backend being orchestrated may comprise any kind of co-processor comprising multiple processing elements, examples shown in figure 15 are GPU, HPDP, RC64 and PULP.

Figure 16 shows examples of data input to and output from an optimiser. The configuration data used by the optimiser may comprise general data such as an AI model, and any one or more of maximum number of ring buffers, maximum pool size, assignable cores, one or more optimisation criteria such as latency, and/or any other configuration data mentioned elsewhere here. In addition the configuration data may comprise data specific to the co-processor such as GPU or HPDP for example.

Various functions described herein can be implemented in hardware, software, or any combination thereof. If implemented in software, the functions can be stored on or transmitted over as one or more instructions or code on any suitable computer-readable medium. For example, the optimiser may be provided as a computer readable medium to be implemented on a computer, or offered as a cloud service for optimisation of third party architecture.

Although illustrated as a single system, it is to be understood that HPDP nodes for example may be provided as a distributed system. Thus, for instance, several devices may be in communication by way of a network connection and may collectively perform tasks described as being performed by one computing device.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices, any of which may be used to implement the optimiser for example.

It will be understood that the benefits and advantages described above may relate to one example or may relate to several examples. The invention is not limited to examples that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices where appropriate or possible.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method for accelerating execution of an algorithm in a computing system comprising a central processing unit "CPU" and a plurality of processing elements, wherein the CPU is configured to orchestrate the operation of the plurality of processing elements, the method comprising implementing an optimiser to determine a configuration file for the computing system, wherein the optimiser:
receives optimisation criteria relating to the operation of the algorithm;
receives data relating to the running of the algorithm in the computing system according to a naive configuration file; and
adjusts the naive configuration file to output an optimised configuration file according to the optimisation criteria.

2. The method of claim 1 wherein the computing system is an onboard computing system and the optimiser is implemented in a separate computing system.

3. The method of claim 1 or claim 2 wherein the computing system comprises one or more lock-free ring buffers and wherein a configuration file for the computing system comprises instructions for instantiating a specified number of lock-free ring buffers and assigning them to CPU cores and orchestrating the operation of the processing elements.

4. The method of claim 3 wherein a configuration file for the computing system maps one or more algorithm operations or layers to one or more lock-free ring buffers.

5. The method of claim 3 or claim 4 wherein:
the algorithm comprises multiple streams and the computing system implements a device memory pool and a stream pool;
the one or more lock free ring buffers are configured to retrieve memory and streams from the respective pools and output these to processing elements.

6. The method of any preceding claim wherein the algorithm comprises multiple streams and the optimisation includes execution of at least two streams in parallel.

7. The method of claim 6 wherein a configuration file for the computing system delegates processing elements to streams.

8. The method of any preceding claim wherein the optimiser adjusts the native configuration file using a genetic algorithm.

9. The method of any preceding claim wherein the algorithm of which the execution is to be accelerated is an AI algorithm.

10. The method of any preceding claim wherein the criteria comprise minimising or maximising any one or more of parameters selected from configuration file comprises any one or more of latency, power consumption, throughput, array processor memory usage and CPU usage.

11. The method of any preceding claim wherein the plurality of processing elements are comprised in a graphics processing unit "GPU" and the processing elements comprise GPU kernels.

12. The method of claim 11 wherein the optimiser creates an optimal number of streams that will be executed in parallel, associates memory with the streams and determines an optimal number of ring buffers that will orchestrate the streams.

13. The method of any preceding claim wherein the plurality of processing elements are comprised in a HPDP and the processing elements comprise HPDP nodes.

14. The method of claim 13 wherein the optimiser distributes operators of the algorithm to different HPDP nodes.

15. A computer program comprising instructions which, when the program is executed by a computer, cause the computer to carry out the method of any preceding claim.
